# EUROPEAN PATENT SPECIFICATION

(11) **EP 1 544 012 B1**
(45) Date of publication and mention of the grant of the patent: **02.04.2008**
(21) Application number: 04380192.7
(22) Date of filing: 28.09.2004
(51) Int. Cl.: B60J 5/04

(54) **Electric motor support assembly for motor vehicles**
Befestigungseinrichtung für Elektromotor in einem Kraftfahrzeug
Ensemble support pour moteur électrique dans un véhicule à moteur

(30) Priority: 12.12.2003 ES 200302854 U
(43) Date of publication of application: 22.06.2005
(73) Proprietor: Daumal Castellon, Melchor, 08013 Barcelona (ES)
(72) Inventor: Daumal Castellon, Melchor, 08013 Barcelona (ES)
(74) Representative: Morgades y Manonelles, Juan Antonio

(56) References cited:
- EP-A1- 1 090 788
- EP-A1- 1 243 452
- EP-A1- 1 347 139
- EP-A2- 1 231 350
- US-A- 5 425 206
- US-A1- 2002 040 554

## Description

The present invention relates, as stated in its title, to an electric motor support assembly for motor vehicles which novel manufacturing, conformation and design features fulfil the purpose to which it has been specifically conceived, with a maximum safety and effectiveness.

More particularly, the invention refers to a support for a power window assembly comprising, among other parts, an electric motor, a driving cable drum or spool and those parts allowing it to be secured to the motor vehicle door.

The motor vehicle door essentially comprises an outer portion and a inner reinforcing structure serving the purpose both as a reinforcement and as a support for the various parts provided therein.

The reinforcement structure defines to its right and left hand in the movement direction, a dry area and a wet area respectively, the power window device being mounted, among other parts, and further comprising the driving cable, a rail and window pane holding means to a power window guide and to the perimeter of the window frame of the door located at the upper part thereof. Other parts provided on the reinforcing structure are the inner panel, loudspeakers, door opening-closing mechanisms and other parts such as wiring of the inner part of the door.

When assembling the parts to the door in general, it should be kept into account not only the assembly but also maintenance and removal operations in the case of damage, as well as, in the case of accident and damages in the door, removal of the door from the parts provided therein to be replaced with a new one and the assembly of the parts that have not been damaged.

Therefore, the operating mode of a door should be such that it is accessible and on the other hand all the elements provided either on the dry area and the wet area may be assembled and disassembled with no limitation if required, in the less time possible, as well as by using less tools, thus facilitating the speed and comfort of such tasks: assembly, disassembly, maintenance and replacement of parts or damaged assemblies in case of an accident of the motor vehicle affecting the door both on the exposed area thereof and on the non exposed area or resistant structure thereof.

The state of the art in this technological field, see e.g. US-A-2002/0040554, is defined by different arrangements allowing the attachment of the electric motor and the drum or spool to the right and left hand of the door resistant structure, so that the drum or spool is on the wet area and the electric motor is on the dry area, all of them being intended that this operation is as simple as possible, as everything is carried out on a motor vehicle production line and the time that it is spent for the assembly of the door and parts thereof is very limited so that most of said arrangements include, in the assembly of the power window device, a support member provided with a door resistant structure so that it is capable to fit said assembly by means of a simple press-fit operation or by fixing them to said support using screws or lugs if possible.

The speed of the assembly should be such that it does not affect ease of gaining access to all of the part either in wet and dry areas once the motor vehicle is in use. In other words, a quick assembly is not useful when maintenance or replacement operations of a part then becomes difficult and expensive and it results in breakage either of the support or the anchorage parts of said support or the assembly.

The present invention seeks to overcome said disadvantages of the arrangement itself as well as the support assembling, and then the assembly and its maintenance as it is formed of a very simple support as it comprises only two pieces, which in turn are easy to manufacture. The first of them is referred to as a support and, the second of them is referred to as a fastening screw, which has two different purposes: first is for fastening the support structure to the door structure, and second is for securing and fastening the power window device to the support and in turn to the door resistant structure.

The support is a polyhedric body having a flat lower base including a central bore. In the vicinity of said central bore and at the lowermost portion of said base a perimetric skirt is provided having a first, upright portion extending in a concave portion. There is also provided an upper portion base forming a recess for receiving and seating a screw having also a polyhedric head with a long threaded stem. Said upper portion extends upward into a perimetric upright shape then turning downward sloppingly at the upper portion so that it is directed to the screw head.

In the assembly of the support, an appropriate portion of the door resistant structure is bent by the concave portion thereof until the screw is passed through said door resistant structure. Therefore, in said operation the support is completely locked to said structure, and then the screw is inserted through the upper portion of the support by bending the vertical configuration of the support until the screw is fitted and the head is secured by the upper perimetric configuration of the support cover or overmoulding.

In the stem threaded portion the electric motor housing of the power window assembly is screwed in such a way that disassembly is carried out by the same operations, that is, unscrewing the motor from the stem and removing it from the support by pressing on vertical arrangement, the configuration of which will be better understood from the drawing herein attached in the present specification.

Further details and features of the present invention will be apparent from the following description, which refers to the accompanying drawings that schematically represent the preferred details. These details are given by way of example, which refer to a possible case of practical embodiment, but it is not limited to the disclosed details; therefore this description must be considered from a illustrating point of view and without any type of limitations.

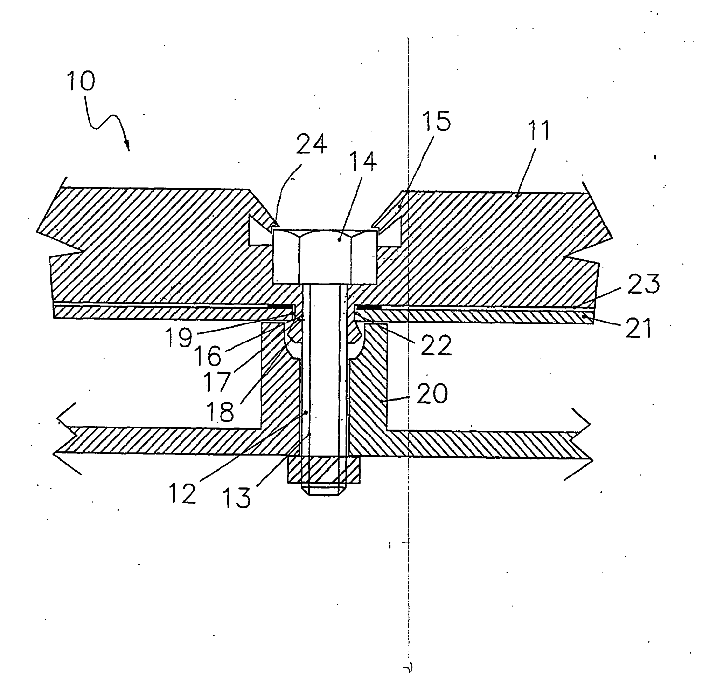

Fig. 1 is a cross-section of the cover drum (11) with the screw (12) and the assembly (10) secured to the door resistant structure (21).

A detailed list of the various parts cited in the present invention is given below: (10) assembly, (11) cover drum, (12) screw, (13) threaded portion, (14) screw head, (15) skirt, (16) support bore, (17) support lower extension, (18) concave skirt, (19) fitting area, (20) electric motor, (21) door resistant structures, (22) bore, (23) cover drum of lower base (11), (24) lower perimeter skirt (15)

In one of the preferred embodiments of what is the object of the present invention and as it can be seen from the drawing, the assembly (10) is formed by a cover drum (11) and a screw (12). Said screw (12) comprises a screw head (14) and a threaded portion or stem (13).

The cover drum (11) has a polyhedric body having a flat lower base (23) extending downward around a central bore (16) in a cylindrical skirt which in turn extends downward in a concave skirt. The upper portion of the cover drum (11) extends upward according to a turned down skirt (15) which lower perimeter (24) is directed to the screw head (12). The purpose of said perimeter is to secure the screw head (14) of the screw (12), once said screw (12) has been fitted. Fastening of the screw (12) to the cover may be overmoulded by the upper portion of the cover drum (11) by bending the skirt (15) downward, at the same time that the screw (12) is prevented of being rotated as the electric motor is mounted therein.

The placement of the cover drum (11) on bore (22) provided in the door resistant portion (21) is achieved by facing the skirt (17-18) to the drill (22) and pressing the cover drum (11) by one hand. Therefore the skirt (17-18) is first compressed and then, after said bore (22) has been passed, it is opened up outward. Then, the screw (12) is also inserted by being pressed through the upper portion of said cover drum (11), and the skirt (15) is bent so that the screw is then passed through inside of the skirt (17-18) and it is pressed by the skirt (17-18) and finally the electric motor is secured to the threaded portion (13) of the screw (12).

The perimeter (24) prevents the movement of the screw head (14) and therefore of the screw (12) as the corresponding electric motor is fitted to the threaded portion (13), helped by the pressure of the skirt (17-18) on the stem (13).

Once having been sufficiently described what the present invention consists in accordance to the enclosed drawings, it is understood that any detail modification can be introduced as appropriate, provided that variations may alter the essence of the invention as summarised in the appended claims.

## Claims

1. - Electric motor support assembly for motor vehicles fitted in a resistant structure (21) of the door of the motor vehicle for securing a power window device, **characterized in that** said assembly (10) comprises a cover drum (11) and a screw (12), said cover drum (11) comprising in turn a polyhedric body having a flat lower base (23) extending around a central bore (16) affecting the body of the cover drum (11) in a skirt having a first portion (17) directed downward vertically and extending into a concave portion (18), the upper part of said cover drum (11) extending upward in a skirt (15) that is bent on itself directed downward.

2. - Electric motor support assembly for motor vehicles according to the preceding claim, **characterized in that** the screw (12) is secured inside said cover drum (11) by being pressed by the skirt (15) and the lower perimeter (24) thereof.

3. - Electric motor support assembly for motor vehicles according to claim 1, **characterized in that** the cover drum (11) is secured to the drill (22) of the resistant structure (21) by pressing on the upper portion of the cover drum (11) so that the concave portion (18) is compressed at the first time so that it is inserted into said drill (22) and then it is opened up outward fastening said cover drum (11) to the resistant structure (21) and the screw (12) to the cover drum (11).

## Revendications

1. Ensemble support de moteur électrique pour véhicules à moteur logé dans une structure résistante (21) de la portière du véhicule à moteur pour fixer un dispositif de vitre électrique, **caractérisé par le fait que** cet ensemble (10) comprend un carter cuve (11) et une vis (12), ce carte cuve (11) comprenant à son tour un corps polyédrique ayant une base inférieure plate (23) se développant autour d'une perforation centrale (16) affectant le corps du carter cuve (11) dans une jupe ayant une première portion (17) dirigée vers le bas verticalement et se développant dans une portion concave (18), la partie supérieure de ce carter cuve 811) se développant vers le haut dans une jupe (15) qui est disposée sur celui-ci dirigée vers le bas.

2. Ensemble support de moteur électrique pour véhicules à moteur conformément à la revendication précédente, **caractérisé par le fait que** la vis (12) est fixée à l'intérieur de ce carter cuve (11) en étant pressée par la jupe (15) et le périmètre inférieur (24) de celui-ci.

3. Ensemble support de moteur électrique pour véhicules à moteur conformément à la revendication 1, **caractérisé par le fait que** le carter cuve (11) est fixé à la perforation (22) de la structure résistante (21) en pressant la portion supérieure du carter cuve (11) de sorte à ce que la portion concave (18) soit alors enfoncée de sorte à s'introduire dans cette perforation (22) puis à s'ouvrir à l'extérieur fixant ce carte cuve (11) à la structure résistante (21) et la vis (12) au carte cuve (11).

## Patentansprüche

1. Elektromotorhalterung für Kraftfahrzeuge, die in einen widerstandsfähigen Rahmen (21) in der Fahrzeugtür zur sicheren Befestigung einer Fensterhebevorrichtung eingebaut wird, **dadurch gekennzeichnet, dass** die Halterung (10) eine Abdecktrommel (11) und eine Schraube (12) umfasst, wobei die Abdecktrommel (11) ihrerseits aus einem polyedrischen Körper mit einem flachen Unterteil (23) besteht, das sich um eine Mittelbohrung (16) erstreckt und auf den Körper der Abdecktrommel (11) in Form einer Schürze einwirkt, bei der ein erster Teil (17) vertikal nach unten gerichtet ist und in einen konkaven Teil (18) übergeht, wobei der obere Abschnitt der Abdecktrommel (11) nach oben in eine um sich selbst nach unten gebogene Schürze (15) übergeht.

2. Elektromotorhalterung für Kraftfahrzeuge nach dem vorhergehenden Anspruch, **dadurch gekennzeichnet, dass** die Schraube (12) im Inneren der Abdecktrommel (11) durch den Druck der Schürze (15) und deren unterem Rand (24) befestigt ist.

3. Elektromotorhalterung für Kraftfahrzeuge nach Anspruch 1, **dadurch gekennzeichnet, dass** die Abdecktrommel (11) an der Bohrung (22) des widerstandsfähigen Rahmens (21) durch Druck auf den oberen Teil der Abdecktrommel (11) gesichert ist, sodass der konkave Teil (18) zunächst so zusammengedrückt wird, dass er in die Bohrung (22) hineingleitet und sich dann nach außen öffnet, um die Abdecktrommel (11) an dem widerstandsfähigen Rahmen (21) und die Schraube (12) an der Abdecktrommel (11) zu befestigen.
